# EUROPÄISCHE PATENTANMELDUNG

(11) **EP 1 686 416 A1**
(43) Veröffentlichungstag der Anmeldung: **02.08.2006**
(21) Anmeldenummer: 06001641.7
(22) Anmeldetag: 26.01.2006
(51) Int. Cl.: G03B 5/00, G01B 11/24

(54) **Verfahren und Vorrichtung zur Aufnahme eines Bildes, insbesondere durch einen CCD-Sensor**

(30) Priorität: 01.02.2005 DE 102005004617; 04.08.2005 DE 102005036770
(71) Anmelder: Steinbichler Optotechnik GmbH, 83115 Neubeuern (DE)
(72) Erfinder: Lazar, Markus Dr, 83131 Nussdorf (DE); Steinbichler, Marcus Dr., 83115 Neunbeuern (DE)
(74) Vertreter: Zinnecker, Armin

(57) **Zusammenfassung**

Eine Kamera umfaßt einen Zeilenensor oder einen Flächensensor (1) und eine Abbildungsoptik (2) zum Projizieren eines Bildes auf den Sensor (1). Um die Auflösung zu erhöhen ist eine Verschiebeeinrichtung (6) zum Verschieben des Bildes relativ zum Sensor (1) vorgesehen (Fig. 2).

## Beschreibung

Die Erfindung betrifft ein Verfahren zur Aufnahme eines Bildes durch einen Zeilensensor oder einen Flächensensor, insbesondere einen CCD-Sensor oder einen CMOS-Sensor, bei dem das Bild durch eine Abbildungsoptik auf den Sensor projiziert und von dem Sensor aufgenommen wird. Die Erfindung betrifft ferner eine Kamera mit einem Zeilensensor oder einem Flächensensor, insbesondere einem CCD-Sensor oder einem CMOS-Sensor, und einer Abbildungsoptik zum Projizieren eines Bildes auf den Sensor.

Kameras dieser Art sind bereits bekannt. Sie können insbesondere in 3D-Messgeräten verwendet werden. Bei diesen Kameras werden Zeilensensoren oder Flächensensoren verwendet, auf denen eine Vielzahl von lichtempfindlichen Zellen (Pixeln) regelmäßig, vorzugsweise rechteckig oder quadratisch, angeordnet sind. Insbesondere werden CCD-Sensoren oder CMOS-Sensoren (CMOS-Chips oder CMOS-Zeilensensoren) verwendet.

Die Auflösung derartiger Sensoren ist jedoch begrenzt. Um die Auflösung zu steigern, kann die Anzahl der Pixel erhöht werden. Bei gleichbleibender Pixelgröße führt dies zu größeren Sensoren, wodurch der Einfluß der optischen Abbildungsfehler größer wird. Wenn die Pixel verkleinert werden, wird das Signal/Rauschverhältnis der Bildinformation verschlechtert.

Zur Steigerung der Auflösung des Bildes ist es möglich, den Sensor zwischen zwei oder mehreren Bildaufnahmen um einen bestimmten Bruchteil des Pixelabstandes zu verschieben, was durch einen geeigneten Aktor, beispielsweise einen Piezo-Aktor, erfolgen kann. Dadurch werden zusätzliche Bildinformationen an den Stellen zwischen den ursprünglichen Pixeln gewonnen. Der Aufwand zur Verschiebung des Sensors ist allerdings sehr hoch.

Aufgabe der Erfindung ist es, ein verbessertes Verfahren und eine verbesserte Kamera der eingangs angegebenen Art vorzuschlagen.

Bei einem Verfahren der eingangs angegebenen Art wird diese Aufgabe dadurch gelöst, daß das Bild relativ zum Sensor um einen Bruchteil des Pixelabstandes verschoben und aufgenommen wird. Das Bild kann in horizontaler und/oder vertikaler Richtung verschoben werden. Es kann durch eine oder mehrere Verschiebungen um einen Bruchteil relativ zum Sensor verschoben werden. Die erfindungsgemäße Kamera ist durch eine Verschiebeeinrichtung zum Verschieben des Bildes relativ zum Sensor gekennzeichnet. Sie umfaßt vorzugsweise eine Bildverarbeitungseinrichtung.

Gemäß der Erfindung wird das Bild gegenüber dem Sensor um einem Bruchteil des Pixelabstandes verschoben. Dabei wird der Sensor nicht bewegt. Es werden allerdings die Bildstrahlen optisch verschoben. Hierdurch kann mit verhältnismäßig einfachen Mitteln eine Erhöhung der Auflösung erreicht werden. Ferner kann in bestimmten Anwendungsfällen der weitere Vorteil erreicht werden, daß Moire-Effekte vermindert oder vermieden werden können.

Die Erfindung betrifft ferner ein Verfahren zur Aufnahme eines Farbbildes mit einem Zeilensensor oder einem Flächensensor, bei dem das Bild durch eine Abbildungsoptik auf den Sensor projiziert wird und von dem Sensor nach Farben getrennt aufgenommen wird. Bei einem derartigen Verfahren wird die der Erfindung zugrundeliegende Aufgabe dadurch gelöst, daß das Bild relativ zum Sensor und/oder der Sensor relativ zum Bild um einen oder mehrere Pixelabstände verschoben und aufgenommen wird. Nach einem bekannten Verfahren wird die Farbinformation dadurch gewonnen, das jeweils benachbarte Pixel mit einem von mehreren Farbfiltem belegt sind, beispielsweise mit einem von drei Farbfiltern, insbesondere einem roten, einem grünen und einem blauen Farbfilter. Somit mißt jeder Pixel nur einen Farbwert, beispielsweise rot (R), grün (G) oder blau (B). Die anderen beiden Farbwerte des Pixels werden durch Interpolation benachbarter Werte gewonnen. Zur Steigerung der Auflösung wird das Bild erfindungsgemäß relativ zum Sensor und/oder der Sensor relativ zum Bild um einen Pixelabstand oder um ein ganzzahliges Vielfaches eines Pixelabstandes verschoben und aufgenommen. Hierdurch kann ein interpolierter Wert durch einen gemessenen Wert ersetzt werden. Durch mehrmaliges Verschieben kann durch dieses Verfahren erreicht werden, daß, bei drei Farbwerten, zu jedem Pixel eine gemessene Farbinformation gewonnen wird, wodurch die Auflösung weiter gesteigert werden kann. Die Verschiebung kann in horizontaler und/oder vertikaler Richtung erfolgen. Auch für dieses Verfahren kann eine erfindungsgemäße Kamera, bei der das Bild durch die Abbildungsoptik nach Farben getrennt auf den Sensor projiziert wird, verwendet werden.

Die beiden erfindungsgemäßen Lösungen können miteinander kombiniert werden. Es ist also möglich, eine Verschiebung um einen Pixelabstand durchzuführen, um einen weiteren Farbwert zu gewinnen, und zusätzlich eine Verschiebung um einen Bruchteil eines Pixelabstandes durchzuführen, um die Auflösung zu steigern.

Vorteilhafte Weiterbildungen sind in den Unteransprüchen beschrieben.

Vorteilhaft ist es, wenn die Kamera eine Platte umfaßt, die in einem Winkel zur optischen Achse der Abbildungsoptik angeordnet ist. Bei der Platte handelt es sich vorzugsweise um eine planparallele Platte. Es ist allerdings grundsätzlich auch möglich, eine prismatische Platte zu verwenden. Vorzugsweise handelt es sich bei der Platte um eine Glasplatte. Die Platte kann allerdings auch aus einem anderen durchsichtigen Werkstoff, insbesondere Kunststoff, hergestellt sein.

Vorzugsweise ist die Platte kippbar. Sie kann um zwei verschiedene Achsen kippbar sein. Die Kippachsen stehen vorzugsweise senkrecht zueinander. Sie verlaufen vorzugsweise horizontal und vertikal. Vorzugsweise verlaufen die Kippachsen parallel zur Anordnungsrichtung der Pixel des Sensors. Die Kippachsen verlaufen vorzugsweise quer zur optischen Achse der Abbildungsoptik.

Stattdessen oder zusätzlich kann die Platte schwenkbar sein. Vorzugsweise ist die Platte um eine Achse schwenkbar, die parallel zur optischen Achse der Abbildungsoptik verläuft oder die mit der optischen Achse der Abbildungsoptik identisch ist.

Die Erfindung betrifft ferner ein 3D-Meßgerät, das durch eine mit einem Zeilensensor oder einem Flächensensor, einer Abbildungsoptik zum Projizieren eines Bildes, insbesondere eines nach Farben getrennten Bildes, auf den Sensor und einer Verschiebeeinrichtung zum Verschieben des Bildes relativ zum Sensor und/oder zum Verschieben des Sensors relativ zum Bild gekennzeichnet ist. Insbesondere betrifft die Erfindung ein 3D-Meßgerät, das durch eine erfindungsgemäße Kamera gekennzeichnet ist.

Ausführungsbeispiele der Erfindung werden nachstehend anhand der beigefügten Zeichnung im einzelnen erläutert. In der Zeichnung zeigt
- Fig. 1: mehrere schematische, perspektivische Darstellungen einer Kamera mit einer kippbaren, planparallelen Glasplatte,
- Fig. 2: eine Kamera mit einer schwenkbaren, planparallelen Glasplatte in einer schematischen Seitenansicht und
- Fig. 3: die Kamera gemäß Fig. 2 in mehreren schematischen, perspektivischen Ansichten.

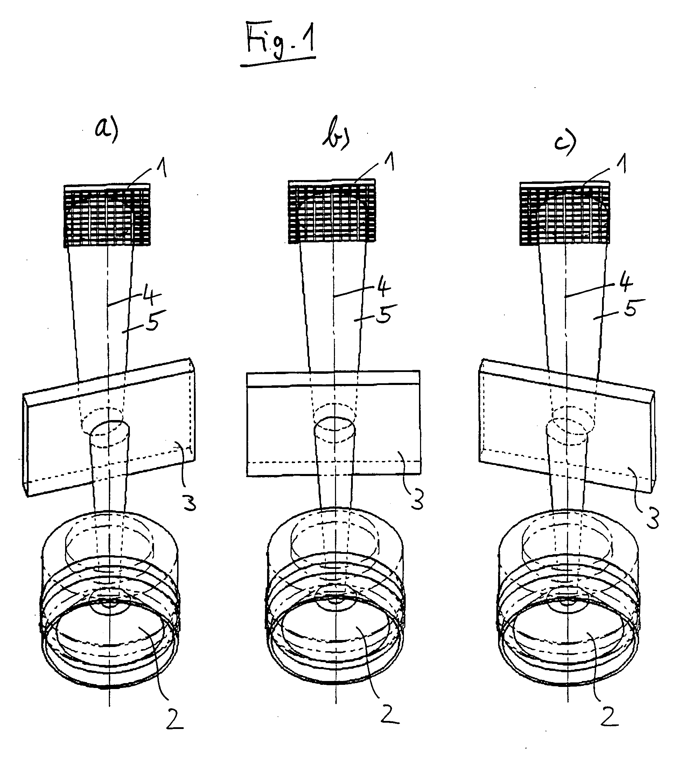

Die in Fig. 1 gezeigte Kamera umfaßt einen CCD-Sensor 1, auf dem eine Vielzahl von Pixeln in einer regelmäßigen rechteckigen Anordnung vorhanden ist. Die lichtempfindlichen Pixel sind durch schmale, nicht lichtempfindliche Streifen voneinander getrennt. Die Kamera umfaßt ferner eine Abbildungsoptik 2, durch die ein Bild auf den CCD-Sensor 1 projiziert und von diesem CCD-Sensor 1 aufgenommen wird. Das Ladungsmuster des CCD-Sensors wird in eine Bildverarbeitungseinrichtung (in der Zeichnung nicht dargestellt) weitergeleitet. Es kann dort gespeichert werden.

Zwischen der Abbildungsoptik 2 und dem CCD-Sensor 1 ist eine planparallele Glasplatte 3 angeordnet, die um eine vertikale, die optische Achse 4 der Abbildungsoptik 2 schneidende Achse kippbar ist. Die Platte 3 könnte auch vor der Abbildungsoptik 2 oder in der Abbildungsoptik 2 vorgesehen sein. In Fig. 1 b ist die Ausgangsstellung gezeigt, in der die planparallele Glasplatte 3 senkrecht auf der optischen Achse 4 steht. In Fig. 1 a ist die planparallele Platte 3 nach links gekippt, in Fig. 1c ist sie nach rechts gekippt. Durch diese Verkippungen wird das Strahlenbündel 5, das auf den CCD-Sensor 1 projiziert wird, nach links (Fig. 1 a) und nach rechts (Fig. 1c) verschoben. Die Verkippung der Glasplatte 3 und damit die Verschiebung des das Bild repräsentierenden Strahlenbündels 5 erfolgen um einen vorbestimmten Betrag, der einem vorbestimmten Bruchteil des Pixelabstands in horizontaler Richtung entspricht.

Die planparallele Glasplatte 3 kann auch um eine horizontale, die optische Achse 4 schneidende Achse kippbar sein (in der Zeichnung nicht dargestellt), um denselben Effekt in vertikaler Richtung zu erreichen.

Die bei verschiedenen Verkippungen der Glasplatte 3 aufgenommenen Bilder werden der Bildverarbeitungseinrichtung zugeführt und dort zu einem Bild mit verbesserter Auflösung verarbeitet.

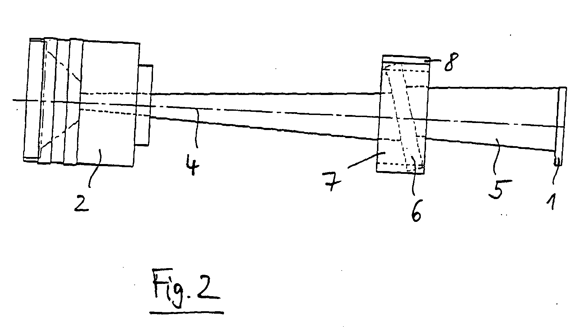

Bei der Ausführungsform nach Fig. 2 umfaßt die Kamera ebenfalls eine Platte 6, die in einem Winkel zur optischen Achse 4 der Abbildungsoptik 2 angeordnet ist. Auch hier befindet sich die Glasplatte 6 zwischen der Abbildungsoptik 2 und dem CCD-Sensor 1.

Im Unterschied zur Ausführungsform nach Fig. 1 ist die planparallele Glasplatte 6 in ein Gehäuse 7 eingebaut, das um eine Achse schwenkbar gelagert ist, die mit der optischen Achse 4 der Abbildungsoptik 2 übereinstimmt. Die Glasplatte 6 kann fest in das Gehäuse 7 eingebaut sein. Sie kann allerdings auch in dem Gehäuse 7 in ihrer Neigung verstellbar sein, um sie gegenüber dem CCD-Sensor 1 und/oder der Abbildungsoptik 2 zu justieren und/oder auf verschiedene CCD-Sensoren 1, Abbildungsoptiken 2 und/oder Abstände davon einzustellen. Das Gehäuse 7 weist einen Nocken 8 auf, der sich an seinem Außenumfang befindet und durch den eine Drehbewegung in das Gehäuse 7 eingeleitet werden kann.

Durch eine Drehung des Gehäuses 7 und damit der planparallelen Glasplatte 6 können verschiedene Verschiebungen des auf den CCD-Sensor 1 projizierten Bildes erreicht werden. Beispielsweise können durch eine Drehung um jeweils 90° Verschiebungen in der Reihenfolge
nach links
nach oben
nach rechts
nach unten
erreicht werden. Die Drehung des Gehäuses 7 und damit die Schwenkung der planparallelen Glasplatte 6 können nach Erreichen der jeweils erforderlichen Schwenkstellung unterbrochen werden, bis das Bild vom CCD-Sensor 1 mit der jeweiligen Verschiebung aufgenommen worden ist. Wenn allerdings die Drehgeschwindigkeit des Gehäuses 7 gegenüber der Abtastgeschwindigkeit des CCD-Sensors 1 gering ist, kann die Drehung des Gehäuses 7 auch kontinuierlich durchgeführt werden.

Vorzugsweise ist die Abtastung des CCD-Sensors 1 mit der Drehstellung des Gehäuses 7 und damit der Glasplatte 6 synchronisiert.

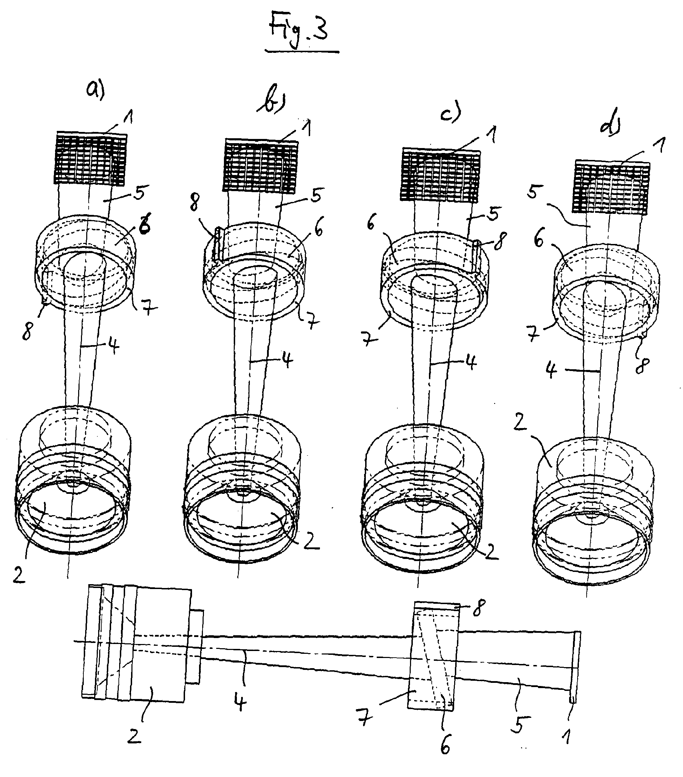

Die Abtastung kann auch in der Weise erfolgen, daß im Winkelabstand von 90° Positionen durchlaufen werden, die folgenden Verschiebungen entsprechen:
nach links unten (Fig. 3a)
nach links oben (Fig. 3b)
nach rechts oben (Fig. 3c)
nach rechts unten (Fig. 3d).

Die bei den verschiedenen Verschiebungen aufgenommenen Bilder werden einer Bildverarbeitungseinrichtung zugeführt und dort zu einem Bild mit höherer Auflösung verarbeitet.

Die erfindungsgemäße Kamera umfaßt eine Abbildungsoptik, insbesondere ein Objektiv. Das aus der Abbildungsoptik austretende Strahlenbündel enthält die Bildinformation. Je nach Neigungswinkel der Platte wird ein Bildversatz des Strahlenbündels relativ zur optischen Achse und damit auf dem CCD-Sensor erreicht. Durch Einstellen des Verkippungswinkels kann der gewünschte Bildversatz erreicht werden. Mit Hilfe einer nachgeschalteten rechnergestützten Bildverarbeitung kann aus den zu unterschiedlichen Zeitpunkten aufgenommenen, verschobenen Bildern das Gesamtbild rekonstruiert werden, und zwar mit einer höheren Auflösung.

## Patentansprüche

1. Verfahren zur Aufnahme eines Bildes durch einen Zeilensensor oder einen Flächensensor (1), bei dem das Bild durch eine Abbildungsoptik (2) auf den Sensor (1) projiziert und von dem Sensor (1) aufgenommen wird,
**dadurch gekennzeichnet,**
**daß** das Bild relativ zum Sensor (1) um einem Bruchteil des Pixelabstandes verschoben und aufgenommen wird.

2. Verfahren nach Anspruch 1, **dadurch gekennzeichnet, daß** das Bild in horizontaler und/oder vertikaler Richtung verschoben wird.

3. Verfahren zur Aufnahme eines Farbbildes durch einen Zeilensensor oder einen Flächensensor (1), bei dem das Bild durch eine Abbildungsoptik (2) auf den Sensor (1) projiziert und von dem Sensor (1) nach Farben getrennt aufgenommen wird,
**dadurch gekennzeichnet,**
**daß** das Bild relativ zum Sensor (1) und/oder der Sensor (1) relativ zum Bild um einen oder mehrere Pixelabstände verschoben und aufgenommen wird.

4. Verfahren nach Anspruch 3, **dadurch gekennzeichnet, daß** das Bild und/oder der Sensor (1) in horizontaler und/oder vertikaler Richtung verschoben wird.

5. Verfahren nach Anspruch 3 oder 4, **gekennzeichnet durch** die Merkmale des Anspruchs 1 oder 2.

6. Kamera mit einem Zeilensensor oder einem Flächensensor (1) und einer Abbildungsoptik (2) zum Projizieren eines Bildes, insbesondere eines nach Farben getrennten Bildes, auf den Sensor (1),
**gekennzeichnet durch**
eine Verschiebeeinrichtung (3, 6) zum Verschieben des Bildes relativ zum Sensor (1) und/oder eine Verschiebeeinrichtung zum Verschieben des Sensors (1) relativ zum Bild.

7. Kamera nach Anspruch 6, **gekennzeichnet durch** eine Bildverarbeitungseinrichtung.

8. Kamera nach Anspruch 6 oder 7, **dadurch gekennzeichnet, daß** die Kamera eine Platte (3, 6) umfaßt, die in einem Winkel zur optischen Achse (4) der Abbildungsoptik (2) angeordnet ist.

9. Kamera nach Anspruch 8, **dadurch gekennzeichnet, daß** die Platte (3) kippbar ist.

10. Kamera nach Anspruch 8 oder 9, **dadurch gekennzeichnet, daß** die Platte (6) schwenkbar ist.

11. 3D-Meßgerät, **gekennzeichnet durch** eine Kamera mit einem Zeilensensor oder einem Flächensensor (1), einer Abbildungsoptik (2) zum Projizieren eines Bildes, insbesondere eines nach Farben getrennten Bildes, auf den Sensor (1) und einer Verschiebeeinrichtung (3, 6) zum Verschieben des Bildes relativ zum Sensor (1) und/oder zum Verschieben des Sensors (1) relativ zum Bild, insbesondere **gekennzeichnet durch** einen Kamera nach einem der Ansprüche 6 bis 10.
